# EUROPÄISCHE PATENTANMELDUNG

(11) **EP 3 815 828 A1**
(43) Veröffentlichungstag der Anmeldung: **05.05.2021**
(21) Anmeldenummer: 19206966.4
(22) Anmeldetag: 04.11.2019
(51) Int. Cl.: B23K 9/09, B23K 9/12

(54) **VERFAHREN UND VORRICHTUNG ZUM SCHWEISSEN EINER SCHWEISSNAHT**

(71) Anmelder: FRONIUS INTERNATIONAL GmbH, 4643 Pettenbach (AT)
(72) Erfinder: Waldhör, Andreas, 4643 Pettenbach (AT); Willinger, Martin, 4643 Pettenbach (AT)
(74) Vertreter: Isarpatent

(57) **Zusammenfassung**

Schweißvorrichtung (1) zum Schweißen einer Schweißnaht, insbesondere einer Wurzelschweißnaht, mit einem reversierenden Schweißdraht (9), dessen Vorschubgeschwindigkeit, V_{D}, durch eine Steuerung (4) der Schweißvorrichtung (1) automatisch auf einen vorgegebenen minimalen Geschwindigkeitswert, V_{Dmin}, reduziert wird, falls während einer Lichtbogenbrennphase innerhalb einer bestimmten Zeitspanne, Δt, oder innerhalb einer bestimmten Wegstrecke, Δs, des Schweißdrahtes (9) kein Kurzschluss, KS, detektiert wird.

## Beschreibung

Die Erfindung betrifft ein Verfahren und eine Vorrichtung zum Schweißen einer Schweißnaht mit einem reversierenden Schweißdraht bzw. Schweißdrahtelektrode.

Das CMT-Schweißverfahren (CMT: Cold Metal Transfer) ist ein Metallschutzgas-Schweißverfahren mit reversierender Schweißdrahtelektrode. Beim CMT-Schweißprozess wird der unter elektrischer Spannung stehende Schweißdraht in Richtung des Werkstücks bewegt, bis sich ein Kurzschluss bildet. Anschließend wird der Schweißdraht in entgegengesetzter Richtung zurückbewegt. Durch die Drahtbewegung können sich beim Kurzschluss die Schweißperlen von dem Schweißdraht ablösen, sodass weniger Spritzer während des Schweißprozesses entstehen. Durch die geregelte Stromzufuhr und die unterstützende Wirkung der Drahtbewegung des Schweißdrahtes beim Werkstoffübergang erfolgt zudem ein geringer Wärmeeintrag auf den Grundwerkstoff.

Beim Wurzelschweißen mit größeren Spalten kann es jedoch vorkommen, dass bei gleichbleibender Vorschubgeschwindigkeit der Schweißdraht das Schmelzbad durchsticht. Dies kann insbesondere vorkommen, falls die Drahtvorschubgeschwindigkeit des Schweißdrahtes noch relativ hoch ist, sodass der Schweißdraht in der Vorwärtsbewegung hin zu dem Schmelzbad dieses durchsticht und somit kein Kurzschluss erkannt werden kann. Bei herkömmlichen CMT-Schweißprozessen bestehen in der Lichtbogenphase nur zwei Vorschubphasen. Während eines Booststromes weist der Schweißdraht eine bestimmte Vorschubgeschwindigkeit auf, welche bei einer anschließenden Kurzschlusswartephase reduziert ist, bis ein Kurzschluss eintritt. Beim Wurzelschweißen besteht jedoch die Gefahr, dass das Schmelzbad vom Schweißdraht durchstochen wird und demzufolge kein Kurzschluss erkannt werden kann. Das Durchstechen des Schmelzbades führt dazu, dass der Lichtbogen erlischt. Das ungewollte Durchstechen des Schmelzbades führt somit zu einer erheblichen Qualitätsverschlechterung der hergestellten Schweißnaht, da unaufgeschmolzener Schweißdraht auf der Unterseite der Wurzel herausragt.

Es ist daher eine Aufgabe der vorliegenden Erfindung, ein Verfahren und eine Vorrichtung zum Schweißen einer Schweißnaht mit erhöhter Schweißnahtqualität zu schaffen.

Diese Aufgabe wird erfindungsgemäß durch ein Lichtbogenschweißverfahren mit den in Patentanspruch 1 angegebenen Merkmalen gelöst.

Die Erfindung schafft demnach ein Lichtbogenschweißverfahren zum Schweißen einer Schweißnaht mit einem reversierenden Schweißdraht, dessen Vorschubgeschwindigkeit automatisch auf einen vorgegebenen minimalen Geschwindigkeitswert reduziert wird, falls während einer Lichtbogenbrennphase innerhalb einer bestimmten Zeitspanne oder innerhalb einer bestimmten Wegstrecke des Schweißdrahtes kein Kurzschluss detektiert wird.

Das erfindungsgemäße Lichtbogenschweißverfahren verhindert insbesondere ein Durchstechen eines Schmelzbades durch den Schweißdraht bei größeren Spalten, insbesondere bei der Herstellung einer Wurzelschweißnaht.

Bei einer möglichen Ausführungsform des erfindungsgemäßen Lichtbogenschweißverfahrens wird die Vorschubgeschwindigkeit des Schweißdrahtes stufenweise oder kontinuierlich auf einen vorgegebenen minimalen Geschwindigkeitswert reduziert, sobald innerhalb der bestimmten Zeitspanne oder innerhalb der bestimmten Wegstrecke kein Kurzschluss detektiert wird.

Bei einer weiteren möglichen Ausführungsform des erfindungsgemäßen Lichtbogenschweißverfahrens wird die Schweißspannung überwacht und bei Einbruch der Schweißspannung ein Kurzschluss automatisch detektiert.

Bei einer weiteren möglichen Ausführungsform des erfindungsgemäßen Lichtbogenschweißverfahrens wird parallel zur Reduzierung der Vorschubgeschwindigkeit des Schweißdrahtes der Schweißstrom auf einen vorgegebenen minimalen Stromwert reduziert.

Bei einer weiteren möglichen Ausführungsform des erfindungsgemäßen Lichtbogenschweißverfahrens wird der Schweißdraht nach vorgenommener Reduzierung seiner Vorschubgeschwindigkeit auf den vorgegebenen minimalen Geschwindigkeitswert während der Lichtbogenbrennphase mit einer positiven Vorschubbewegung in Richtung des zu schweißenden Werkstücks bewegt, bis ein Kurzschluss detektiert wird.

Bei einer weiteren möglichen Ausführungsform des erfindungsgemäßen Lichtbogenschweißverfahrens wird nach Detektion des Kurzschlusses der Schweißdraht in entgegengesetzter Richtung mit negativer Vorschubgeschwindigkeit weg von den zu schweißenden Werkstücken zurückbewegt.

Bei einer alternativen Ausführungsform des erfindungsgemäßen Lichtbogenschweißverfahrens wird nach Detektion des Kurzschlusses der Schweißdraht weiter mit verminderter positiver Vorschubgeschwindigkeit hin zu den zu schweißenden Werkstücken bewegt.

Bei einer weiteren möglichen Ausführungsform des erfindungsgemäßen Lichtbogenschweißverfahrens werden der minimale Geschwindigkeitswert der Vorschubgeschwindigkeit des Schweißdrahtes und/oder der minimale Stromwert des Schweißstromes entsprechend einer gespeicherten Kennlinie eingestellt.

Bei einer weiteren möglichen Ausführungsform des erfindungsgemäßen Lichtbogenschweißverfahrens wird die Vorschubgeschwindigkeit des Schweißdrahtes und/oder der Schweißstrom stufenweise oder kontinuierlich entsprechend einer gespeicherten Kennlinie reduziert, sobald innerhalb der bestimmten Zeitspanne und/oder der bestimmten Wegstrecke kein Kurzschluss detektiert wird.

Bei einer weiteren möglichen Ausführungsform des erfindungsgemäßen Lichtbogenschweißverfahrens werden verschiedene Kennlinien zur Reduzierung der Vorschubgeschwindigkeit des Schweißdrahtes und/oder zur Reduzierung des Schweißstromes für unterschiedliche Schweißparameter bereitgestellt.

Bei einer weiteren möglichen Ausführungsform des erfindungsgemäßen Lichtbogenschweißverfahrens umfassen die Schweißparameter insbesondere ein Material und/oder einen Durchmesser des Schweißdrahtes, eine Art eines verwendeten Schutzgases und einen Typ eines ausgewählten Schweißverfahrens.

Bei einer weiteren möglichen Ausführungsform des erfindungsgemäßen Lichtbogenschweißverfahrens liegt der minimale Geschwindigkeitswert der Vorschubgeschwindigkeit des Schweißdrahtes zwischen 0,1 und 5,0 m/min.

Bei einer bevorzugten Ausführungsform des erfindungsgemäßen Lichtbogenschweißverfahrens liegt der minimale Geschwindigkeitswert der Vorschubgeschwindigkeit des Schweißdrahtes in einem Bereich zwischen 0,5 und 3,0 m/min.

Bei einer möglichen Ausführungsform des erfindungsgemäßen Lichtbogenschweißverfahrens liegt der minimale Geschwindigkeitswert der Vorschubgeschwindigkeit des Schweißdrahtes bei etwa 1 m/min.

Bei einer weiteren möglichen Ausführungsform des erfindungsgemäßen Lichtbogenschweißverfahrens liegt der minimale Stromwert des Schweißstromes zwischen 0 Ampere und 200 Ampere.

Bei einer bevorzugten Ausführungsform des erfindungsgemäßen Lichtbogenschweißverfahrens liegt der minimale Stromwert des Schweißstromes in einem Bereich zwischen 0 Ampere bis 50 Ampere, vorzugsweise bei etwa 20 Ampere.

Die Erfindung schafft ferner gemäß einem weiteren Aspekt eine Schweißvorrichtung mit den in Patentanspruch 13 angegebenen Merkmalen.

Die Erfindung schafft demnach eine Schweißvorrichtung zum Schweißen einer Schweißnaht, insbesondere einer Wurzelschweißnaht, mit einem reversierenden Schweißdraht, dessen Vorschubgeschwindigkeit durch eine Steuerung der Schweißvorrichtung automatisch auf einen vorgegebenen minimalen Geschwindigkeitswert reduziert wird, falls während einer Lichtbogenbrennphase innerhalb einer bestimmten Zeitspanne oder innerhalb einer bestimmten Wegstrecke des Schweißdrahtes kein Kurzschluss detektiert wird.

Bei einer möglichen Ausführungsform der erfindungsgemäßen Schweißvorrichtung werden die Vorschubgeschwindigkeit des Schweißdrahtes und/oder der Schweißstrom stufenweise oder kontinuierlich entsprechend einer in einem Datenspeicher der Schweißvorrichtung gespeicherten Kennlinie reduziert, falls innerhalb einer bestimmten durch eine Messeinrichtung der Schweißvorrichtung gemessenen Zeitspanne oder innerhalb einer bestimmten durch eine Messeinrichtung der Schweißvorrichtung gemessenen Wegstrecke des Schweißdrahtes kein Kurzschluss von einer Detektionseinrichtung der Schweißvorrichtung detektiert wird.

Bei einer weiteren möglichen Ausführungsform der erfindungsgemäßen Schweißvorrichtung werden die in dem Datenspeicher gespeicherten Kennlinien aus einer Datenbank heruntergeladen.

Im Weiteren werden mögliche Ausführungsformen des erfindungsgemäßen Lichtbogenschweißverfahrens und der erfindungsgemäßen Schweißvorrichtung unter Bezugnahme auf die beigefügten Figuren näher erläutert.

Es zeigen:
- Fig. 1: ein mögliches Ausführungsbeispiel einer erfindungsgemäßen Schweißvorrichtung zum Schweißen einer Schweißnaht;
- Fig. 2: ein Blockschaltbild zur Darstellung einer Ausführungsform der erfindungsgemäßen Schweißvorrichtung zum Schweißen einer Schweißnaht;
- Fig. 3: Signaldiagramme zur Erläuterung der Funktionsweise des erfindungsgemäßen Lichtbogenschweißverfahrens und der erfindungsgemäßen Schweißvorrichtung.

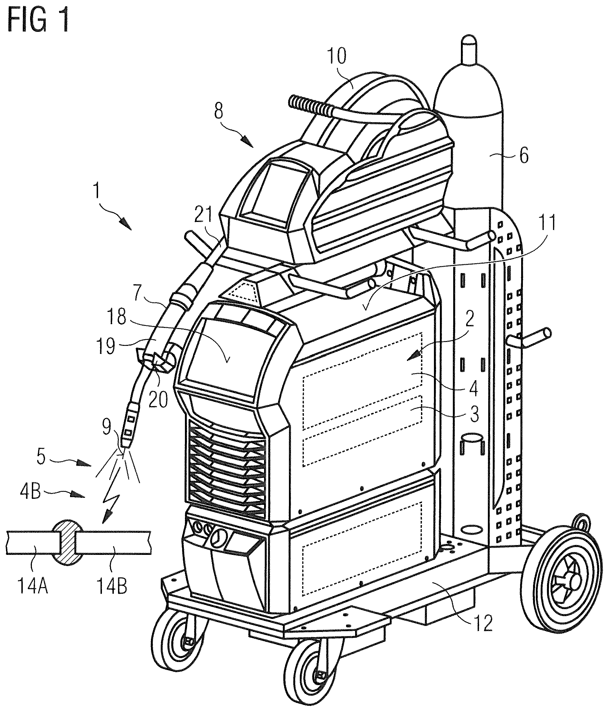

Fig. 1 zeigt ein Ausführungsbeispiel einer erfindungsgemäßen Schweißvorrichtung 1 zum Schweißen einer Schweißnaht. Wie man in Fig. 1 erkennen kann, umfasst die Schweißvorrichtung 1 eine Stromquelle 2 mit einem darin vorgesehenen Leistungsteil 3. Die Schweißvorrichtung 1 weist eine Steuerung 4 auf, die zur Regelung von Schweißparametern P vorgesehen ist. Diese Schweißparameter P umfassen beispielsweise einen Schweißstrom I und eine Vorschubgeschwindigkeit V_{D} eines Schweißdrahtes 9. Dieser Schweißdraht 9 umfasst eine abschmelzende Schweißdrahtelektrode. Die Steuereinrichtung 4 kann beispielsweise mit einem Steuerventil verbunden sein, welches in einer Versorgungsleitung für ein Schutzgas 5 zwischen einem Gasspeicher 6 und einem Schweißbrenner 7 angeordnet ist. Die Steuerung 4 steuert eine Einrichtung 8 zur Förderung der abschmelzenden Schweißdrahtelektrode 9 an. Dabei kann über eine Versorgungsleitung der Schweißdraht 9 von einer Vorratstrommel 10 im Schweißbrenner 7 der Schweißvorrichtung 1 zugeführt werden. Die Fördereinrichtung 8 kann in einem Gehäuse 11 der Stromquelle 2 integriert sein oder, wie in Fig. 1 dargestellt, in einem Zusatzgerät auf einem Fahrwagen 12 positioniert sein.

Der Gleichstrom I zum Aufbauen eines Lichtbogens 13, wie er in Fig. 1 dargestellt ist, wird über eine Schweißleitung in dem Leistungsteil 3 der Stromquelle 2 der Schweißdrahtelektrode 9 zugeführt. Der Lichtbogen 13 besteht zwischen dem Schweißdraht und den Werkstücken 14A, 14B, wie in Fig. 1 schematisch dargestellt. In dem in Fig. 1 dargestellten Beispiel werden zwei Werkstücke 14A, 14B miteinander verschweißt. Beispielsweise werden Werkstücke 14A, 14B stirnseitig miteinander verschweißt. Dabei besteht zwischen den Stirnseiten der beiden Werkstücke 14A, 14B ein Spalt, in dem ein Schmelzbad entsteht. Die Schweißvorrichtung 1 verhindert, dass die Schweißdrahtelektrode 9 das Schmelzbad zwischen den Stirnseiten der beiden Werkstücke 14A, 14B durchsticht. Die in Fig. 1 dargestellte Schweißvorrichtung 1 eignet sich somit zum Herstellen einer Wurzelschweißnaht.

Die Stromquelle 2 weist bei einer Ausführungsform eine Nutzerschnittstelle bzw. Ein- und Ausgabevorrichtung 18 auf, über die unterschiedliche Schweißparameter P, Betriebsarten oder Schweißprogramme eingestellt werden können. Die Steuerung 4 der Vorrichtung 1 steuert in Abhängigkeit der eingestellten Schweißparameter P, Betriebsdaten und Schweißprogramme Komponenten der Schweißvorrichtung 1 an. Bei Verwendung eines entsprechenden Schweißbrenners 7 können auch dort Einstellvorgänge vorgenommen werden. Der Schweißbrenner 7 kann mit einer separaten Schweißbrenner-Ein- und Ausgabevorrichtung 19 ausgestattet sein. Bei einer möglichen Ausführungsform ist der Schweißbrenner 7 über einen Datenbus mit der Stromquelle 2, insbesondere der darin integrierten Steuerung 4, und mit der Fördervorrichtung 8 zur Förderung des Schweißdrahtes 9 verbunden.. Der Schweißbrenner 7 ist über ein Schlauchpaket 21 mit der Stromquelle 2 der Schweißvorrichtung 1 verbunden. In dem Schlauchpaket 21 sind verschiedene Leitungen, insbesondere Versorgungsleitungen für die Schweißdrahtelektrode 9, für das Schutzgas 5, für den Kühlkreislauf sowie für Datenübertragungsleitungen vorgesehen.

Der Schweißdraht 9 der Schweißvorrichtung 1 ist reversierend ausgebildet, d.h., er kann sowohl mit einer Vorwärtsbewegung in Richtung hin auf die Werkstücke 14 bewegt werden als auch mit einer Rückwärtsbewegung weg von den Werkstücken 14. Die Vorschubgeschwindigkeit V_{D} des Schweißdrahtes 9 wird durch die Steuerung 4 der Schweißvorrichtung 1 gesteuert. Die Vorschubgeschwindigkeit V_{D} des Schweißdrahtes 9 wird durch die Steuerung 4 der Schweißvorrichtung 1 automatisch auf einen vorgegebenen minimalen Geschwindigkeitswert v_{Dmin} reduziert, falls während einer Lichtbogenbrennphase LBBP innerhalb einer bestimmten Zeitspanne Δt oder innerhalb einer bestimmten Wegstrecke Δs des Schweißdrahtes 9 kein Kurzschluss KS detektiert wird. Dabei wird die Vorschubgeschwindigkeit V_{D} des Schweißdrahtes 9 und/oder der Schweißstrom I stufenweise oder kontinuierlich entsprechend einer in einem Datenspeicher 22 der Schweißvorrichtung 1 gespeicherten Kennlinie KL reduziert, falls innerhalb einer bestimmten durch eine Messeinrichtung 23 der Schweißvorrichtung 1 gemessenen Zeitspanne Δt oder innerhalb einer bestimmten durch eine Messeinrichtung 23 der Schweißvorrichtung 1 gemessenen Wegstrecke Δs des Schweißdrahtes 9 kein Kurzschluss KS von einer Detektionseinrichtung der Schweißvorrichtung 1 detektiert wird. Die Messeinrichtung 23 ist vorzugsweise auch in der Lage einen Kurzschluss KS zu detektieren, beispielsweise anhand der überwachten Schweißspannung U. Bricht die Schweißspannung U ein, wird ein Kurzschluss KS durch die Messeinrichtung 23 detektiert.

Bei einer möglichen Ausführungsform können die in dem Datenspeicher 22 der Schweißvorrichtung 1 gespeicherten Kennlinien KL aus einer Datenbank heruntergeladen werden. Hierzu verfügt die Schweißvorrichtung 1 bei einer möglichen Ausführungsform über eine Datenschnittstelle, die über ein Datennetzwerk mit einem entfernten Server in Verbindung steht, um von einer Plattform oder Datenbank oder gespeicherte Kennlinien KL in den lokalen Datenspeicher 22 der Schweißvorrichtung 1 herunterzuladen.

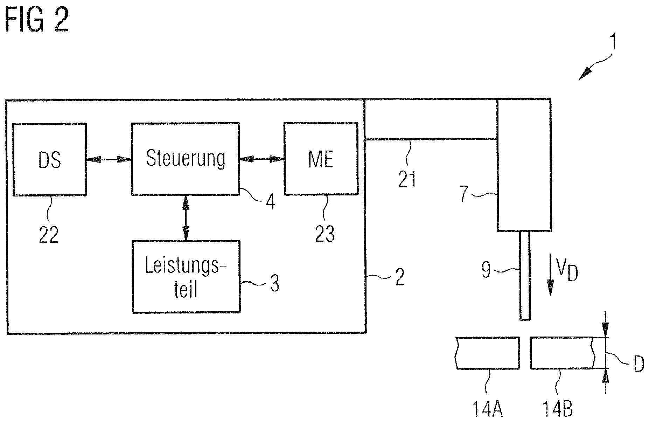

Fig. 2 zeigt schematisch Komponenten der erfindungsgemäßen Schweißvorrichtung 1. Ein Schweißbrenner 7 ist über ein Schlauchpaket 21 mit der Stromquelle 2 der Schweißvorrichtung 1 verbunden. Im Gehäuse der Stromquelle 2 befindet sich vorzugsweise die Steuerung 4 mit einem Leistungsteil 3. Die Steuerung 4 hat bei der in Fig. 2 schematisch dargestellten Ausführungsform der Schweißvorrichtung 1 Zugriff auf einen lokalen Datenspeicher (DS) 22, in dem ein oder mehrere Kennlinien KL abgelegt sein können. Weiterhin sind in dem Gehäuse der Stromquelle 2 Messeinrichtungen 23 vorgesehen, um verschiedene Parameter zu erfassen. Der reversierende Schweißdraht 9 weist eine Vorschubgeschwindigkeit V_{D} auf, die durch die Steuerung 4 der Schweißvorrichtung 1 gesteuert werden kann. Die Vorschubgeschwindigkeit V_{D} des Schweißdrahtes 9 wird durch die Steuerung 4 der Schweißvorrichtung 1 automatisch auf einen vorgegebenen minimalen Geschwindigkeitswert v_{Dmin} reduziert, falls während einer Lichtbogenbrennphase innerhalb einer bestimmten Zeitspanne Δt oder innerhalb einer bestimmten Wegstrecke Δs des Schweißdrahtes 9 kein Kurzschluss KS durch eine entsprechende Messeinrichtung 23 der Schweißvorrichtung 1 detektiert wird.

Bei einer möglichen Ausführungsform wird die Vorschubgeschwindigkeit V_{D} des Schweißdrahtes 9 durch die Steuerung 4 stufenweise auf einen vorgegebenen minimalen Geschwindigkeitswert V_{Dmin} reduziert, sofern innerhalb der bestimmten Zeitspanne Δt oder innerhalb der bestimmten Wegstrecke Δs kein Kurzschluss KS detektiert wird. Alternativ kann die Vorschubgeschwindigkeit V_{D} des Schweißdrahtes 9 durch die Steuerung 4 auch kontinuierlich auf den vorgegebenen minimalen Geschwindigkeitswert V_{Dmin} reduziert werden, sofern innerhalb der bestimmten Zeitspanne Δt oder innerhalb der bestimmten Wegstrecke Δs kein Kurzschluss KS detektiert worden ist. Vorzugsweise wird die Schweißspannung U durch eine Messeinrichtung 23 der Schweißvorrichtung 1 überwacht. Bei einem Einbruch der Schweißspannung U wird automatisch ein Kurzschluss KS detektiert. Die Reduzierung der Drahtvorschubgeschwindigkeit V_{D} des Schweißdrahtes 9 kann somit entweder über einen einstellbaren Zeitzyklus oder über eine definierte Wegstrecke erfolgen.

Bei einer möglichen Ausführungsform der erfindungsgemäßen Schweißvorrichtung wird parallel zur Reduzierung der Vorschubgeschwindigkeit V_{D} des Schweißdrahtes 9 der Schweißstrom I auf einen vorgegebenen minimalen Stromwert Iₘᵢₙ reduziert. Bei einer möglichen Ausführungsform wird der Schweißdraht 9 nach vorgenommener Reduzierung seiner Vorschubgeschwindigkeit V_{D} auf den vorgegebenen minimalen Geschwindigkeitswert V_{Dmin} während der Lichtbogenbrennphase mit einer positiven Vorschubbewegung in Richtung der zu schweißenden Werkstücke 14A, 14B bewegt, bis ein Kurzschluss KS detektiert worden ist. Nach Detektion des Kurzschlusses KS wird der Schweißdraht 9 anschließend in entgegengesetzter Richtung mit negativer Vorschubgeschwindigkeit V_{D} weg von den zu schweißenden Werkstücken 14A, 14B zurückbewegt.

Sowohl der minimale Geschwindigkeitswert der Vorschubgeschwindigkeit V_{Dmin} des Schweißdrahtes 9 als auch der minimale Stromwert Iₘᵢₙ des Schweißstromes werden bei einer möglichen Ausführungsform entsprechend einer gespeicherten Kennlinie KL eingestellt. Diese Kennlinie KL wird vorzugsweise in einem lokalen Datenspeicher 22 der Stromquelle 2 gespeichert. Bei einer möglichen Ausführungsform können die Kennlinien KL über eine Datenschnittstelle von einer entfernten Datenbank in den lokalen Datenspeicher 22 der Stromquelle 2 heruntergeladen werden. Bei einer möglichen Ausführungsform werden verschiedene Kennlinien KL zur Reduzierung der Vorschubgeschwindigkeit V_{D} des Schweißdrahtes 9 und/oder zur Reduzierung des Schweißstromes I für unterschiedliche Schweißparameter P bereitgestellt. Bei einer weiteren Ausführungsform berechnet ein Prozessregler (nicht dargestellt) der Stromquelle 2, vorzugsweise durch Interpolation, aufgrund der eingestellten Schweißparameter SP sich die Kennlinienpunkte KL zur Reduzierung der Vorschubgeschwindigkeit V_{D} des Schweißdrahtes 9 und/oder zur Reduzierung des Schweißstromes I .Diese Schweißparameter P umfassen insbesondere ein Material und/oder einen Durchmesser des Schweißdrahtes 9, eine Art des verwendeten Schutzgases 5 und/oder einen Typ eines durch den Nutzer ausgewählten Schweißverfahrens bzw. Schweißbetriebsmodus.

Der minimale Geschwindigkeitswert der Vorschubgeschwindigkeit V_{Dmin} des Schweißdrahtes 9 kann je nach Anwendungsfall unterschiedlich berechnet, konfiguriert bzw. definiert sein. Bei einer möglichen Ausführungsform liegt der minimale Geschwindigkeitswert der Vorschubgeschwindigkeit V_{D} des Schweißdrahtes 9 zwischen 0,1 m/min und 0,5 m/min. Vorzugsweise beträgt die Vorschubgeschwindigkeit V_{D} 0,5 m/min bis 3,0 m/min. Bei einer möglichen Ausführungsform ist die Minimalgeschwindigkeit V_{Dmin} des Schweißdrahtes 9 beispielsweise etwa 1 m/min. Der minimale Stromwert Iₘᵢₙ des Schweißstromes I liegt bei einer möglichen Ausführungsform unter 200 Ampere, vorzugsweise im Bereich von 0 Ampere bis zu 50 Ampere. Bei einer möglichen Ausführungsform liegt der minimale Stromwert Iₘᵢₙ des Schweißstromes I beispielsweise bei etwa 20 Ampere.

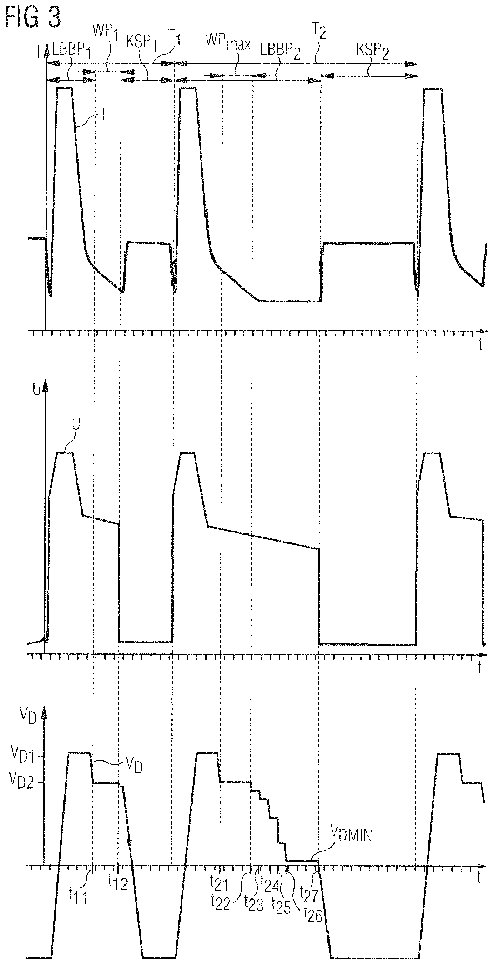

Fig. 3 zeigt einen Prozessablauf zur Erläuterung der Funktionsweise des erfindungsgemäßen Lichtbogenschweißverfahrens und der erfindungsgemäßen Schweißvorrichtung 1 zum Schweißen einer Schweißnaht. Fig. 3 zeigt den zeitlichen Verlauf eines Schweißstromes I und einer Schweißspannung U sowie einer Vorschubgeschwindigkeit V_{D} während eines Lichtbogenschweißprozesses. Der Lichtbogenschweißprozess hat eine Lichtbogenbrennphase LBBP und eine Kurzschlussphase KSP welche sich periodisch wiederholen. Bei dem Lichtbogenschweißprozess ist die Bewegung des Schweißzusatzwerkstoffes bzw. der Schweißdrahtelektrode 9 aktiv in die Regelung des Schweißprozesses eingebunden. Es kann dabei der Schweißdraht 9 vorzugsweise vor und zurück bewegt werden. Während der Lichtbogenbrennphase LBBP des Lichtbogens 13 wird der Schweißdraht 9 in Richtung hin zu dem Werkstück 14 geführt (V_{D} > 0). Die Vorschubgeschwindigkeit V_{D} wird dabei auf den berechneten, vorgegebenen bzw. vorkonfigurierten minimalen Geschwindigkeitswert v_{Dmin} reduziert, falls während der Lichtbogenbrennphase LBBP innerhalb einer bestimmten vorgegebenen Zeitspanne Δt oder innerhalb einer bestimmten vorgegebenen Wegstrecke Δs des Schweißdrahtes 9 kein Kurzschluss KS detektiert wird. Das Reduzieren der Vorschubgeschwindigkeit V_{D} erfolgt bei einer möglichen Ausführungsform über einen einstellbaren Zeitzyklus T. Wie man in Fig. 3 erkennen kann, kann während einer Lichtbogenbrennphase LBBP der Schweißdraht 9 mit einer positiven Vorschubgeschwindigkeit V_{D} nach vorne bewegt. Die Vorschubgeschwindigkeit V_{D} des Schweißdrahtes 9 kann nach einer gewissen Zeitdauer zum Zeitpunkt t₁₁ von einem hohen Geschwindigkeitsniveau V_{D1} auf ein etwas niedrigeres Niveau V_{D2} abgesenkt werden, wobei dann in einer Wartephase WP gewartet wird, ob ein Kurzschluss KS erkannt wird oder nicht. Der Zeitpunkt t₁₁ markiert den Beginn der Kurzschlusswartephase WP. Bei dem in Fig. 3 dargestellten Beispiel wird während des ersten Zeitzyklus T1 innerhalb der vorgesehenen maximalen Wartezeit zum Zeitpunkt t₁₂ erkannt, dass ein Kurzschluss KS aufgetreten ist. Bei dem in Fig. 3 dargestellten Beispiel bricht während der Wartephase WP die überwachte Schweißspannung U zum Zeitpunkt t₁₂ ein und anhand des Spannungseinbruchs kann automatisch detektiert werden, dass ein Kurzschluss KS aufgetreten ist. Die Drahtvorschubgeschwindigkeit V_{D} des Schweißdrahtes 9 wird infolge des erkannten Kurzschlusses KS nach dem Zeitpunkt t₁₂ vom Geschwindigkeitsniveau V_{D2} aus automatisch schnell weiter reduziert und nimmt einen negativen Wert ein (V_{D} < 0), d.h., die Schweißdrahtelektrode 9 wird von dem Werkstück 14 wegbewegt.

In dem zweiten in Fig. 3 dargestellten zweiten Zeitzyklus T2 kommt es während der vordefinierten maximalen Wartephase WPₘₐₓ zu keinem Einbruch der überwachten Schweißspannung U. Die Wartephase WP₂ im zweiten Zeitzyklus T2 beginnt zum Zeitpunkt t₂₁, wenn der Vorschubgeschwindigkeitswert V_{D} ausgehend von dem Geschwindigkeitsniveau V_{D1} auf das Geschwindigkeitsniveau V_{D2} abgesenkt wird. Die Wartephase WP im zweiten Zeitzyklus T2 endet nach Ablauf einer vorgegebenen maximalen Wartezeitdauer zum Zeitpunkt t₂₂. Die Vorschubgeschwindigkeit V_{D} des Schweißdrahtes 9 wird während der Lichtbogenbrennphase LBBP nach Ablauf der Wartezeit bzw. maximalen Wartephase WPₘₐₓ zum Zeitpunkt t22 automatisch stufenweise zu den Zeitpunkten t₂₃, t₂₄, t₂₅, t₂₆ weiter reduziert, wie in Fig. 3 dargestellt ist, insbesondere um ein weiteres Durchstechen eines Schmelzbades in der zwischen den Werkstücken 14A, 14B vorhandenen Spalte zu verhindern. Wie man in Fig. 3 erkennen kann, wird die Drahtvorschubgeschwindigkeit V_{D} in mehreren Stufen bzw. Schritten reduziert, bis ein vorgegebener minimaler Geschwindigkeitswert V_{Dmin} zum Zeitpunkt t₂₆ erreicht ist. Mit dieser geringen Vorschubgeschwindigkeit V_{Dmin} wird der Schweißdraht 9 weiter fortbewegt, bis schließlich der Kurzschluss KS zum Zeitpunkt t₂₇ detektiert wird. Sobald der Kurzschluss KS erkannt worden ist, wird der Schweißdraht 9 vorzugsweise mit einer negativen Vorschubgeschwindigkeit V_{D} bewegt, d.h. in entgegengesetzter Richtung weg von den Werkstücken 14A, 14B. Dabei löst sich der in der Lichtbogenbrennphase LBBP geformte Schweißtropfen ab. Um das schnelle Durchstechen des Schmelzbades mit dem Schweißdraht 9, insbesondere bei der Herstellung einer Wurzelschweißnaht, zu verhindern, wird bei dem erfindungsgemäßen Lichtbogenschweißverfahren der Drahtvorschub in der Kurzschlusswartephase KSP schrittweise reduziert. Um zu verhindern, dass der Schweißdraht 9 zu weit in Richtung auf das Kontaktrohr schmelzen kann, wird vorzugsweise eine Minimumgeschwindigkeit V_{Dmin} definiert. Bei einer möglichen Ausführungsform wird parallel dazu der Schweißstrom I schrittweise reduziert und begrenzt, um ein kontrolliertes Abschmelzen der Schweißdrahtelektrode 9 zu gewährleisten. Mit dem erfindungsgemäßen Lichtbogenschweißverfahren wird die Qualität der hergestellten Schweißnaht erhöht. Das erfindungsgemäße Lichtbogenschweißverfahren eignet sich insbesondere zur Herstellung einer Wurzelschweißnaht. Beim einlagigen Schweißen im Stumpfstoß liegt die Wurzel der Schweißnaht auf derjenigen Seite, die für den Schweißer nicht zugänglich ist.

Bei der erfindungsgemäßen Schweißvorrichtung 1 kann bei einer möglichen Ausführungsform die momentan eingestellte Kennlinie KL über die Vorschubgeschwindigkeit V_{D} auf einer Anzeige einer Nutzerschnittstelle 18 der Stromquelle 2 dem Schweißer angezeigt werden. Bei einer möglichen Ausführungsvariante weist die Nutzerschnittstelle 18 der Stromquelle 2 einen Touchscreen auf, der zur Veränderung der Kennlinie KL seitens des Schweißers bedient werden kann. Beispielsweise kann der Schweißer bei einer möglichen Ausführungsvariante die in Fig. 3 dargestellte Kennlinie KL zur stufenweise Verminderung der Drahtvorschubgeschwindigkeit über die Nutzerschnittstelle 18 anpassen. Für unterschiedliche Ausführungsvarianten der erfindungsgemäßen Schweißvorrichtung 1 können unterschiedliche Messeinrichtungen 23 zur Messung der Wegstrecke Δs des Schweißdrahtes 9 und/oder der Zeitspanne Δt eingesetzt werden. Bei einer möglichen Ausführungsform kann die Wegstrecke Δs des Schweißdrahtes 9 anhand einer gemessenen Zeitspanne und dem aktuellen Verlauf der Vorschubgeschwindigkeit V_{D} berechnet werden. Bei einer weiteren möglichen Ausführungsvariante kann die Wegstrecke Δs des Schweißdrahtes 9 auch beispielsweise optisch detektiert werden. Die Wegstrecke Δs kann bei einer möglichen Ausführungsform mittels eines Encoders der Drahtvorschubeinheit detektiert werden, der eine Messeinheit bildet. Der Encoder bildet dabei einen Signalgeber. Der Encoder kann am Schweißbrenner 7 vorgesehen sein. Weitere Ausführungsvarianten zur Messung der Wegstrecke Δs sind dem Fachmann bekannt. Die Kennlinie KL der Vorschubgeschwindigkeit V_{D} des Schweißdrahtes 9 und insbesondere die minimale Geschwindigkeit V_{Dmin} kann entsprechend einer Dicke D der zu verschweißenden Werkstücke 14A, 14B eingestellt sein. Bei einer möglichen Ausführungsform gibt der Schweißer beispielsweise die Dicke D der zu verschweißenden Bleche ein und eine entsprechende Kennlinie KL wird durch die Steuerung 4 zur Steuerung des Schweißprozesses herangezogen. Bei einer weiteren möglichen Ausführungsform berechnet der Prozessregler (nicht dargestellt) der Schweißstromquelle 2 aufgrund der vorhandenen Schweißparameter die Kennlinienarbeitspunkte und erstellt die Kennlinie KL automatisch. Das erfindungsgemäße Lichtbogenschweißverfahren erlaubt einen nahezu stromlosen Werkstoffübergang sowie eine kontrollierte, saubere und spritzerfreie Tropfenablösung. Ferner wird ein unkontrolliertes Durchstechen eines Schmelzbades in einem größeren Spalt zwischen Werkstücken verhindert.

### Bezugszeichenliste

- 1: Schweißvorrichtung
- 2: Stromquelle
- 3: Leistungsteil
- 4: Steuerung
- 5: Schutzgas
- 6: Gasspeicher
- 7: Schweißbrenner
- 8: Fördereinrichtung
- 9: Schweißdraht
- 10: Vorratstrommel
- 11: Stromquellengehäuse
- 12: Fahrwagen
- LB: Lichtbogen
- 14: Werkstücke
- 18: Nutzerschnittstelle
- 19: Schweißbrenner-Ein- und Ausgabevorrichtung
- 20: Hitzeschutzschild
- 21: Schlauchpaket
- 22: Datenspeicher
- 23: Messeinrichtung

## Patentansprüche

1. Lichtbogenschweißverfahren zum Schweißen einer Schweißnaht mit einem reversierenden Schweißdraht (9), dessen Vorschubgeschwindigkeit, V_{D}, automatisch auf einen vorgegebenen minimalen Geschwindigkeitswert, V_{Dmin}, reduziert wird, falls während einer Lichtbogenbrennphase innerhalb einer bestimmten Zeitspanne, Δt, oder innerhalb einer bestimmten Wegstrecke, Δs, des Schweißdrahtes (9) kein Kurzschluss, KS, detektiert wird.

2. Lichtbogenschweißverfahren nach Anspruch 1,
wobei die Vorschubgeschwindigkeit, V_{D}, des Schweißdrahtes (9) stufenweise oder kontinuierlich auf den vorgegebenen minimalen Geschwindigkeitswert, V_{Dmin}, reduziert wird, sobald innerhalb der bestimmten Zeitspanne, Δt, oder innerhalb der bestimmten Wegstrecke, Δs, kein Kurzschluss, KS, detektiert wird.

3. Lichtbogenschweißverfahren nach Anspruch 1 oder 2,
wobei die Schweißspannung, U, überwacht wird und bei einem Einbruch der Schweißspannung, U, ein Kurzschluss, KS, detektiert wird.

4. Lichtbogenschweißverfahren nach einem der vorangehenden Ansprüche 1 bis 3,
wobei parallel zur Reduzierung der Vorschubgeschwindigkeit, V_{D}, des Schweißdrahtes (9) der Schweißstrom, I, auf einen vorgegebenen minimalen Stromwert, Iₘᵢₙ reduziert wird.

5. Lichtbogenschweißverfahren nach einem der vorangehenden Ansprüche 1 bis 4,
wobei der Schweißdraht (9) nach vorgenommener Reduzierung seiner Vorschubgeschwindigkeit, V_{D}, auf den vorgegebenen minimalen Geschwindigkeitswert, V_{Dmin}, während der Lichtbogenbrennphase mit einer positiven Vorschubbewegung in Richtung des zu schweißenden Werkstücks (14A, 14B) bewegt wird, bis ein Kurzschluss, KS, detektiert wird.

6. Lichtbogenschweißverfahren nach Anspruch 5,
wobei nach Detektion des Kurzschlusses, KS, der Schweißdraht (9) in entgegengesetzter Richtung mit negativer Vorschubgeschwindigkeit, V_{D}, weg von den zu schweißenden Werkstücken (14A, 14B) zurückbewegt wird oder weiter mit verminderter Vorschubgeschwindigkeit hin zu den zu schweißenden Werkstücken (14A, 14B) bewegt wird.

7. Lichtbogenschweißverfahren nach einem der vorangehenden Ansprüche 4 bis 6,
wobei der minimale Geschwindigkeitswert der Vorschubgeschwindigkeit, V_{Dmin}, des Schweißdrahtes (9) und/oder der minimale Stromwert, Iₘᵢₙ, des Schweißstromes, I, entsprechend einer gespeicherten Kennlinie, KL, eingestellt werden.

8. Lichtbogenschweißverfahren nach einem der vorangehenden Ansprüche 1 bis 7,
wobei die Vorschubgeschwindigkeit, V_{D}, des Schweißdrahtes (9) und/oder der Schweißstrom, I, stufenweise oder kontinuierlich entsprechend einer gespeicherten Kennlinie, KL, reduziert werden, sobald innerhalb der bestimmten Zeitspanne, Δt, und/oder der bestimmten Wegstrecke, Δs, kein Kurzschluss, KS, detektiert wird.

9. Lichtbogenschweißverfahren nach Anspruch 8,
wobei verschiedene Kennlinien, KL, zur Reduzierung der Vorschubgeschwindigkeit, V_{D}, des Schweißdrahtes (9) und/oder zur Reduzierung des Schweißstromes, I, für unterschiedliche Schweißparameter bereitgestellt werden.

10. Lichtbogenschweißverfahren nach Anspruch 9,
wobei die Schweißparameter insbesondere ein Material und/oder einen Durchmesser des Schweißdrahtes (9), eine Art eines verwendeten Schutzgases und einen Typ eines ausgewählten Schweißverfahrens umfassen.

11. Lichtbogenschweißverfahren nach einem der vorangehenden Ansprüche 1 bis 10,
wobei der minimale Geschwindigkeitswert der Vorschubgeschwindigkeit, V_{D}, des Schweißdrahtes (9) zwischen 0,1 m/min und 5,0 m/min, vorzugsweise in einem Bereich zwischen 0,5 m/min und 3,0 m/min, liegt.

12. Lichtbogenschweißverfahren nach einem der vorangehenden Ansprüche 4 bis 11,
wobei der minimale Stromwert, Iₘᵢₙ, des Schweißstromes, I, zwischen 0 Ampere und 200 Ampere, vorzugsweise in einem Bereich zwischen 0 Ampere bis 50 Ampere, liegt.

13. Schweißvorrichtung (1) zum Schweißen einer Schweißnaht, insbesondere einer Wurzelschweißnaht, mit einem reversierenden Schweißdraht (9), dessen Vorschubgeschwindigkeit, V_{D}, durch eine Steuerung (4) der Schweißvorrichtung (1) automatisch auf einen vorgegebenen minimalen Geschwindigkeitswert, V_{Dmin}, reduziert wird, falls während einer Lichtbogenbrennphase innerhalb einer bestimmten Zeitspanne, Δt, oder innerhalb einer bestimmten Wegstrecke, Δs, des Schweißdrahtes (9) kein Kurzschluss, KS, detektiert wird.

14. Schweißvorrichtung nach Anspruch 13,
wobei die Vorschubgeschwindigkeit, V_{D}, des Schweißdrahtes (9) und/oder der Schweißstrom, I, stufenweise oder kontinuierlich entsprechend einer in einem Datenspeicher (22) der Schweißvorrichtung (1) gespeicherten Kennlinie, KL, reduziert werden, falls innerhalb einer bestimmten durch eine Messeinrichtung (23) der Schweißvorrichtung (1) gemessenen Zeitspanne, Δt, oder innerhalb einer bestimmten durch eine Messeinrichtung (23) der Schweißvorrichtung (1) gemessenen Wegstrecke, Δs, des Schweißdrahtes (9) kein Kurzschluss, KS, von einer Messeinrichtung (23) der Schweißvorrichtung (1) detektiert wird.

15. Schweißvorrichtung nach Anspruch 13 oder 14,
wobei die in dem Datenspeicher (22) gespeicherten Kennlinien, KL, aus einer Datenbank heruntergeladen werden.
